Europäisches Patentamt

European Patent Office

Office européen des brevets

(19)

(11) Publication number: **0 474 923 A1**

# EUROPEAN PATENT APPLICATION

(21) Application number: **90202422.3**

(22) Date of filing: **11.09.90**

(51) Int. Cl.5: **A63F 9/22**, G06F 15/44

The title of the invention has been amended (Guidelines for Examination in the EPO, A-III, 7.3).

(43) Date of publication of application:
**18.03.92 Bulletin 92/12**

(84) Designated Contracting States:
**DE ES FR GB IT NL**

(71) Applicant: **SIGMA-DELTA N.V.**
**Transportstraat 1**
**B-3980 Tessenderlo(BE)**

(72) Inventor: **Duchâtelet, Roland**
**Boerenlegerstraat 192**
**B-2650 Edegem(BE)**
Inventor: **De Winter, Rudi**
**Corbiestraat 9**
**B-3550 Heusden-Zolder(BE)**

(54) **Apparatus for participating in broadcasted or recorded quiz games.**

(57) This invention relates to an apparatus that enables the TV/video spectator or radio/cassette listener to participate in broadcasted or recorded quiz games at home or in a room outside the studio.

Every player has his own apparatus to give his answer. This individual apparatus calculates the score according to various parameters, which are determined by the studio, but which may be adapted in some realizations according to the player's wish.

There may be a number of players in one room all having their own apparatus and competing against the players in the studio and/or in the room.

The question of the quiz master is followed by a signal containing all the information for the apparatus to work (correct answer, maximum reaction time, stake, mode of operation, etc.) The player gives his answer by a keyboard and the points are shown on a display on the apparatus.

Drawing 2

This invention relates to an apparatus to participate to broadcasted or recorded quizzes.

The state of the art:

Nowadays, the quizzes are played in the studio. The people have to go to the studio to participate in a quiz. Sometimes also, the spectators in the studio can take part in the quiz. Then all seats in the studio have a few buttons, so they can answer multiple choice questions.

The spectators at home normally cannot participate in the quiz at all, though, sometimes, one question may be answered by sending in a postcard. Another way to let the spectators participate is by giving them the possibility to answer by phone.

Unfortunately, this is very unpractical and unfair because only few people can reach the studio because the telephone lines are overoccupied if all people want to answer.

Excellent systems are possible with today's technology. One could think of a computerized network distributed into all living rooms. Unfortunately, this is far too expensive for a private person and, therefore, not applicable for quiz games.

Product:

The object of this invention is to provide an apparatus that enables the TV, radio or video spectator to participate in quiz games. It can be a cheap apparatus suitable for mass production and to be used with the great majority of TV, radio or video sets.

Every player has his own apparatus to give his answer. This individual apparatus calculates the new score according to various parameters (is the answer correct, has the answer been given in time, decreasing the stakes when increasing the response time, various modes of operation are possible).

There may be a number of players in one room all having their own apparatus and competing against the players in the studio and/or in the room.

The question of the quiz master is followed by a beep signal which indicates that the player can give in his answer. All the information for the apparatus to work is coded in the beep signal. The information consists of the correct answer, the maximum reaction time, the stake, the mode of operation. The player gives his answer by a keyboard and the points are shown on a display on the apparatus.

Besides the game aspect, the apparatus can have huge educational properties. Used in combination with video or audio cassettes, it can be used in classes or training courses. Another use is in open school programmes on television or radio: It may, for example, be used at the end of a lesson to check how well the student has learnt or understood the subject.

Working principle:

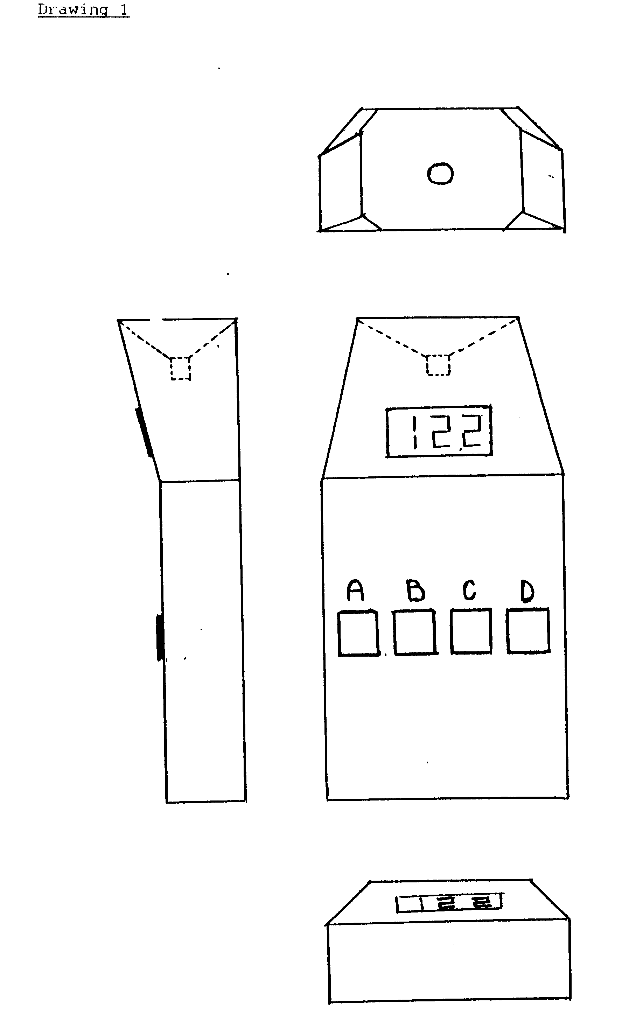

In the basic version, the apparatus has the size of a handsize calculator (see drawing 1). It has four keys A, B, C and D. After the quiz master's question, the player has a time window after the coded signal to give his answer. After this time window, the score is adapted and the quiz carries on.

The top part of the apparatus has a keyboard and a display. The bottom part contains a slot for batteries. On the frontside, there is a wire with an audio jack. This jack plugs into the earphone socket of the television or radio set. If several players want to participate, one apparatus plugs into the earphone socket of the source set (television set, radio set video or audio cassette) and all the others are plugged into another one, thus forming a chain. The inside consists of a printed circuit board with an application specific integrated circuit, a quartz or a ceramic resonator, contacts for the keyboard and the batteries, a few discrete components and a liquid crystal or other kind of display.

The signal, sent by the studio, is an audible signal of about one second long, is emitted by the TV or radio loudspeaker in the room and sent through the earphone outlet to the apparatus.

In another realization, the transmission from the TV to the apparatus is carried out by IR (infra red) light. A small interface box is connected to the earphone connector of the TV. This interface box transforms the audiosignal into coded IR impulses which are sent into the room. These IR signals are picked up by an IR receiver on the handhold apparatus.

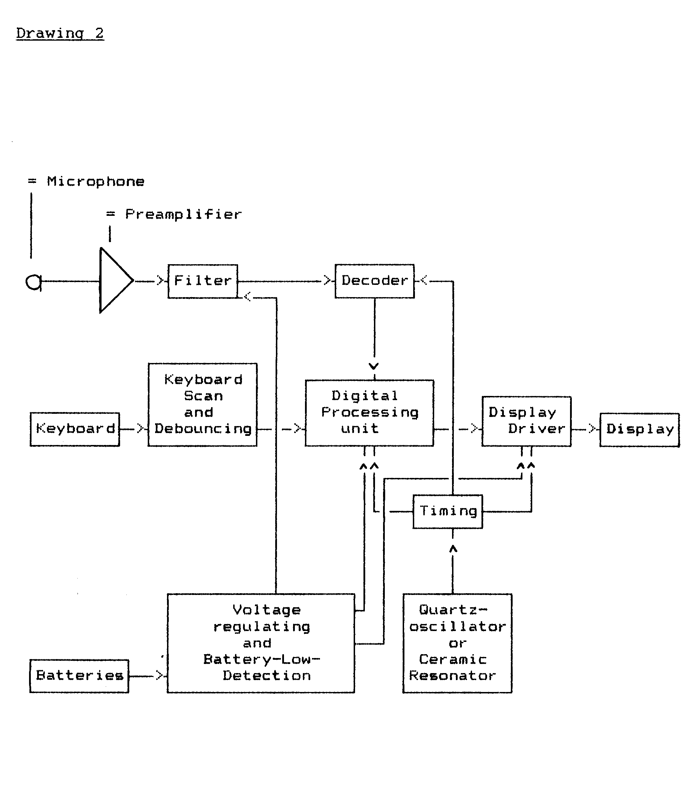

In another realization, the transmission from the source to the apparatus is carried out by radio waves, also using an interface box connected to the source. This realization allows for a bigger number of players sitting in a classroom, a training room, etc. A decoding block decodes the filtered analog signal to a digital signal taking into account the key code and error correcting codes (see simplified schematic drawing 2).

After reception of the data, the player has a limited time to give his answer. When the time for consideration is over, the answer is evaluated and the score is adapted.

In an additional realization, it is possible not only to win points but also to loose points if the answer is false.

In an additional realization, the stake can be variable and determined by the studio: high stakes for difficult questions and lower ones for easy questions.

In an additional realization, it is possible to have the stakes decreased as the time for consideration increases.

In an additional realization, the player can choose his stake depending on the subject of the question coming.

In an additional realization, an alphanumeric keyboard can be added. This opens a whole new set of possibilities. One

can give names, words, numbers or arrange lists, etc. In an additional realization, the quiz mode can be selected by the studio by sending a specific code, so that the apparatus automatically switches between different modes:

- stake fixed
- stake determined by the studio
- stake determined by the player
- win and loose points
- time conditioned decreasing stakes
- a combination of above possibilities

The apparatus can be used with TV and radio broadcasting as well as with video or audio cassettes.

In an additional realization, it is possible to transmit a code to scramble the score at the end of the quiz. This scrambled score is displayed. The listener can mail a card or inform the studio of his score by phone. Then the scrambled score can be compared with the real score. For the player, it is impossible to cheat because he does not know the scrambling mechanism and the scrambling key. Thus, it is possible to play a game with all the viewers/listeners without the risk that some would fake their scores.

In an additional realization, each apparatus has its own code which is used to scramble the answer so that it is possible to check if a winning score is used more than once.

In an additional realization, a socket is added which can be used to program a chip card. The listener can buy these chip cards. It is put in the apparatus before the quiz starts and records the results. At the end of the quiz, the chip card is pulled out and can be sent to the studio. In the studio, it is read out by a computerized system to see the results of each viewer/listener.

In an other way of realization, the data transmission can be carried out by a signal coded in the picture information of the TV signal as is done with Teletext. Then there are two parts, one connected between the aereal and the TV and one handhold apparatus for each player. One is not limited to a display on the apparatus but the visualization can be done on the television set itself. The handhold keyboards can be connected to the decoder by wires or by remote control.

It must be understood that the invention is in no way limited to the above embodiments and that many changes can be brought to it without departing from the scope of the invention as defined by the appended claims.

## Claims

1. Electronic apparatus that enables the spectator or listener to participate in a quiz on television, radio or from a video or audio cassette. The apparatus receives its information through an acoustic tone emitted by the television set, radio set, video or audio cassette. It consists of a display, keys, a battery/ies, a wire with a jack to plug into the earphone outlet, electronic circuitry and a plastic housing. The electronic circuit realizes a preamplifier, a filter, a decoder, a keyboard scanning, a display driver and the score counting. The apparatus counts the score taking into account the input from the studio or the cassette and the answers of the player. The signal transmission is made over the audio channel through the earphone outlet and the wire to the apparatus.

2. An apparatus as in claim #1 with the particularity that the connector jack and wire for audio signal transmission is omitted. Instead the audible signal generated by the speakers is received by a directive microphone and the environmental noise is filtered through a bandpass filter.

3. An apparatus as in claim #1 with the particularity that the handhold apparatus receives on an infrared signal instead of an acoustic one. The infrared signal is transmitted by an interface (comprised in the invention) connected to the TV/radio set, video or audio cassette.

4. An apparatus as in claim #1 with the particularity that a radio frequency in the citizen band range containing the game information is generated from the incoming radio or television signal with an interface rf emitting module plugged into the television or radio and whereby an rf receiver replaces the audio signal processor in the handheld apparatus.

5. An apparatus as in claim #1, whereby all possible quiz playing rules are selectable by the studio. By adding additional information to the data signal the apparatus can vary the playing rules (win and loose, variable stake, amount of time taken for consideration, etc.).

6. An apparatus as in claim #1 and with the particularity that the keyboard is a full alphanumeric keyboard.

7. An apparatus as in claim #1 and with the particularity that the numeric display is an alphanumeric display.

8. An apparatus as in claim 1# with the particularity that the end score is scrambled with transmitted codes which are unique to each or several modules.

9. An apparatus as in claim 1# with the particularity that it has a slot for a chip card that records the game.

10. An apparatus as in claim 1# but where the data are coded in the picture information of the TV signal instead of in the audiosignal.

## Drawing 1

Drawing 2

= Microphone

= Preamplifier

# European Patent Office

## EUROPEAN SEARCH REPORT

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-9 004 439   (RIGHT HEMISPHERE PTY LTD)<br>* Page 1, line 11 - page 4, line 2; page 16, line 28 - page 19, line 37 * | 1 | A 63 F 9/22<br>G 06 F 15/44 |
| A | | 6,7,8,9,10 | |
| Y | BE-A-895 612   (AMPLIKART)<br>* Whole document * | 1 | |
| A | | 2,3 | |
| A | US-A-4 592 546   (FASCENDA et al.)<br>* Column 2, line 20 - column 3, line 45; column 4, line 66 - column 5, line 4 * | 1,4,5,8,10 | |
| A | US-A-4 745 468   (VON KOHORN)<br>* Column 2, line 3 - column 3, line 31; column 3, line 56 - column 5, line 25; column 6, line 22 - column 10, line 4; column 10, line 61 - column 11, line 30 * | 1,5,6,8,9 | |
| A | EP-A-0 338 936   (TELECASH)<br>* Column 1, line 11 - column 4, line 22; column 6, line 19 - column 8, line 16 * | 1 | |
| | | | TECHNICAL FIELDS SEARCHED (Int. Cl.5) |
| A | US-A-2 921 385   (HAMILTON) | 1 | A 63 F 9<br>G 06 F 15 |

The present search report has been drawn up for all claims

| Place of search | Date of completion of search | Examiner |
|---|---|---|
| The Hague | 06 May 91 | DUHR R.H.J.E. |